# FASCICULE DE BREVET EUROPEEN

(11) **EP 2 149 993 B1**
(45) Date de publication et mention de la délivrance du brevet: **13.04.2011**
(21) Numéro de dépôt: 09166221.3
(22) Date de dépôt: 23.07.2009
(51) Int. Cl.: H04B 7/185

(54) **Procede de reduction de collisions des emissions dans un slot TDMA pour des liaisons de donnees**
Verfahren zur Reduzierung von Kollisionen in einem TDMA-Schlitz für Datenübertragungen
Method for reducing transmission collisions in a TDMA slot for data links

(30) Priorité: 29.07.2008 FR 0804328
(43) Date de publication de la demande: 03.02.2010
(73) Titulaire: THALES, 92200 Neuilly sur Seine (FR)
(72) Inventeur: Monnerat, Michel, 31240, SAINT-JEAN (FR); Calmettes, Thibaud, 31400, TOULOUSE (FR)
(74) Mandataire: Esselin, Sophie

(56) Documents cités:
- WO-A-2007/126240
- WO-A-2007/143478

## Description

La présente invention concerne le domaine des systèmes de communication des positions de navires et les procédés associés. Plus particulièrement l'invention se rapporte aux procédés de transmission des données de positionnement de navires et des procédés d'anticollision des informations échangées. Enfin, l'invention s'applique à l'amélioration de la démodulation des signaux émis par des navires et reçus par des satellites, notamment lorsque les communications sont régies sur la base d'un TDMA.

Actuellement, les navires utilisent un système communication permettant d'échanger entre eux des informations relatives à leur position et des informations de cap ou de vitesse. Ce système permet de prévenir d'éventuelles collisions entre navires et ce plus particulièrement dans les zones à forte densité de navires. Ce système est plus connu sous l'appellation d'AIS, dont l'acronyme anglo-saxon signifie « Automatic Identification System ».

L'AIS est un système de communication maritime visant l'échange automatique d'information entre bateaux mais aussi entre bateaux et balises de surveillances à terre. L'objet de ce système est la mise en place d'échange d'informations de position et de vitesse en vue d'éviter toute collision entre vaisseaux/ navires.

Par exemple, un système actuel permet à un navire d'observer la présence des autres navires sur une zone dont le rayon de couverture est d'environ 40000 miles. Dans cette zone un navire peut déterminer par des instruments de télécommunication l'identité, la position et la vitesse et éventuellement les caps des navires évoluant à proximité.

Dans la suite de la description on appellera indifféremment un bateau ou un vaisseau, un navire.

L'AIS est, originellement, un système purement terrestre, les bateaux dialoguant entre eux ou avec une balise sol.

Néanmoins, en vue d'une surveillance globalisée des océans et des mers, une solution est un système de type AIS étendu aux satellites. Cette solution vise à étendre la zone de couverture sans impacter les émetteurs des navires.

Dans cette configuration, les navires sont synchronisés entre eux par GPS et peuvent communiquer leur identité et leurs informations relatives à leur position à partir d'un TDMA dont les caractéristiques, notamment temporelles, sont connues de l'ensemble de la flotte de navires utilisant ce système.

Une solution permet de s'affranchir d'éventuelles collisions entre navires notamment par l'allocation des slots TDMA en émission ou en réception à un navire pour que celui-ci échange notamment ses informations de positions avec au moins un satellite en vue.

Un satellite permet alors de diffuser la position d'un navire sur les slots en réception pour les autres navires. Dans la pratique il est courant que plusieurs satellites soient en vue et permettent de diffuser la configuration du TDMA de manière à ce que les navires occupent un slot libre pour émettre.

Un tel système connu est décrit dans la demande de brevet internationale WO 2007/143478. Ce document divulgue en effet un système spatial de type AIS destiné à suivre et à surveiller simultanément un ou plusieurs navires de haute mer par l'intermédiaire d'un système satellitaire. Chaque satellite embarque une charge utile de communication destinée à recevoir des signaux porteurs d'informations transmises par un ou plusieurs de ces navires et à transmettre les informations reçues.

Un problème est celui de l'accès d'un TDMA partagé par un réseau de navires ne pouvant pas communiquer directement. Notamment, il s'agit d'un problème d'attribution des slots TDMA inoccupés lors de l'insertion d'un navire dans la zone de couverture d'un satellite lorsque d'autres navires ne sont pas en vue directe par ce navire. Ce problème résulte du fait que ce sont les navires qui s'attribuent un slot « apparemment » inoccupé par d'autres navires.

Dans ce dernier cas, il est possible que deux navires émettent dans le même slot TDMA et brouillent réciproquement leurs signaux émis.

Le problème posé repose sur le fait que le système est conçu pour un dialogue à courte distance dans une zone de couverture directe d'un pool de navires sur la base d'un TDMA. La restriction de distance provient essentiellement de la portée géométrique des transmissions entre navires, notamment limitée par la courbure de la terre.

Se pose alors le problème de la couverture satellitaires de plusieurs pools de bateaux, les pools étant disjoints du point de vue des communications, c'est à dire que les navires d'un pool ne détectent pas les navires d'un autre pool. Ce problème se pose lorsque les navires sont trop loin ou lorsque la courbure de la terre empêche une lisibilité directe du point de vue des communications à courte distance.

Potentiellement, un problème résultant de cette situation est l'attribution d'un même slot à des navires ne s'étant pas détectés, étant donné que ce sont les navires eux-mêmes qui s'attribuent un slot TDMA disponible.

La collecte des messages par un satellite voyant de fait plusieurs pools à la fois se heurte à un problème majeur de collision entre les émissions sur un même slot.

L'invention propose de résoudre ce problème notamment par un procédé de détection de l'occupation d'un slot en émission par un navire et permet d'allouer alors un slot non occupé du TDMA.

Avantageusement, le procédé de répartition de slots TDMA d'un réseau de télécommunication entre navires pour lesquels une liaison avec au moins un satellite est établie, la structure du TDMA comprenant une pluralité de slots dans une période de temps fixe (TTDMA), chacun des navires étant synchronisé entre eux au moyen d'un dispositif de synchronisation et chacun des navires émettant, dans au moins un slot, des données comprenant au moins l'une des informations relatives soit à l'identité du navire, soit à sa position, soit à sa vitesse, comprend :
■ une étape préliminaire, réalisée au sein du satellite, de définition d'un premier paramètre de durée (D₁) définissant une durée d'analyse, pour chacun des slots du TDMA, de la présence d'un premier bit de données reçu, la durée de transmission d'un bit (D_{BIT}) étant déterminée par le débit de la liaison entre chaque navire et un satellite ;
pour chaque slot, le procédé comprend :
■ Une première étape d'analyse de la valeur du premier bit reçu pendant la durée du premier paramètre (D₁), à l'issue de laquelle la présence d'une émission de données d'un navire est déterminée dans le slot actif, le slot actif étant le slot comprenant l'instant présent ;
■ Une seconde étape de détection de la présence d'un second signal reçu dans le slot actif, en cas de présence d'une première émission de données provenant d'un navire détecté à la première étape, comprenant la soustraction du niveau du signal reçu ayant généré le premier bit reçu au signal total reçu pendant la durée de transmission du premier bit reçu (D_{BIT}) ;
■ Une troisième étape d'analyse du niveau signal résiduel sur la durée de transmission du premier bit afin de détecter la présence d'un second bit de donnée correspondant au premier bit des données d'un éventuel second signal émis par un autre navire dans le même slot TDMA ;
■ Une quatrième étape d'attribution d'un autre slot du TDMA à l'un des deux signaux reçus ;

Avantageusement, les données émises par chaque navire comprennent des informations relatives à l'identité du navire, à sa position et à sa vitesse.

Avantageusement, le premier paramètre de durée (D1) de l'étape préliminaire est sensiblement proche d'un quart de la durée de réception d'un BIT.

Avantageusement, la détection de la présence d'une émission de données d'un navire est détectée pour une valeur du premier BIT reçu, lors de la première étape, sensiblement égal à 1 pendant la durée du premier paramètre (D1).

Avantageusement, la troisième étape comprend la détermination d'une valeur seuil minimale au-dessus de laquelle le niveau du signal reçu résiduel intégré sur la durée de transmission d'un BIT indique la présence d'un second signal provenant d'un autre navire.

Avantageusement, le procédé attribue un slot adjacent au slot actif au navire émettant le second signal reçu et détecté à la quatrième étape.

Avantageusement, le moyen de synchronisation est réalisé par un dispositif GPS dont le signal est émis par au moins un satellite et reçu par un ensemble de navires.

Avantageusement, un second satellite effectue chacune des étapes du procédé de l'invention et un contrôle de redondance entre les deux satellites est effectué par la transmission entre les deux satellites du résultat du test de présence d'une seconde émission dans un slot du TDMA.

D'autres caractéristiques et avantages de l'invention apparaîtront à l'aide de la description qui suit, faite en regard des dessins annexés qui représentent :
- la figure 1 : une couverture satellitaires de deux pool de navires ;
- la figure 2 : des attributions de slot TDMA d'un ensemble de navires ;
- la figure 3 : un écart entre deux émissions de deux navires dans un même slot TDMA ;
- la figure 4 : deux cas de figures de différents écarts entre les émissions de deux navires ;
- la figure 5 : un cas de couverture d'un ensemble de navires par au moins deux satellites.

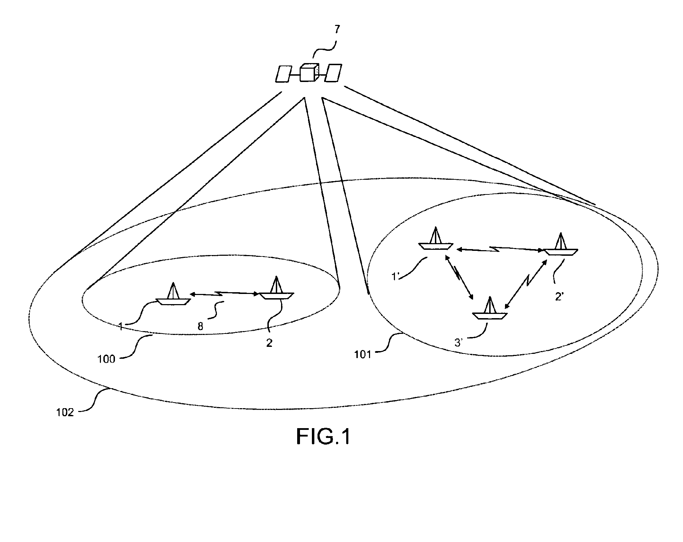

La figure 1 représente un premier réseau de navires 1, 2, chaque navire pouvant communiquer directement avec d'autres navires du premier réseau dans la zone 100 formée par la couverture de la portée des transmissions des deux navires.

Un second réseau de navires 1', 2', 3' forme une seconde zone 101 de couverture dans laquelle les navires peuvent communiquer entre eux directement dans leur rayon d'action.

Le système de communication permet aux navires de s'identifier et/ou de transmettre leur position respective et peut également permettre l'échange de données relatives à leur vitesse et/ou leur cap. Ce système permet d'éviter d'éventuelles collisions entre navires, notamment dans des zones à fortes densités.

Le système AIS permet l'échange de messages entre navires sur la base d'un TDMA, dont l'acronyme anglo-saxon signifie « Time Division Multiplex Access ». Le système AIS permet une répartition sur une période déterminée d'un certain nombre de slots composants le TDMA. Dans cette structure, au moins un slot peut-être attribué à un navire pour l'émission de ses messages et les autres slots permettent à ce même navire de recevoir les messages émis par les autres navires.

La synchronisation du TDMA est généralement assurée par un ensemble de satellites qui émettent un signal GPS permettant à chaque navire d'avoir une référence de temps commune. Dans la figure 1, un satellite 7 couvre la région incluant les deux zones 100 et 101 des deux réseaux de navires, appelés également pools de navires.

Une amélioration de ce système à laquelle l'invention se rapporte est l'intégration dans le système de communication d'un procédé de détection de l'occupation de chaque slot par des émissions de navires et la ré-attribution automatique des émissions à des slots libres lorsqu'au moins deux navires s'attribuent le même slot en émission.

Cette amélioration permet au moyen d'une couverture satellitaires d'élargir la couverture du rayon d'action autour de chaque navire tout en assurant une répartition des slots du TDMA sans collisions d'informations échangées.

La figure 1 représente un satellite 7 qui couvre une région 102 dans laquelle sont incluses les zones 100 et 101.

L'avantage d'un tel système est l'élargissement de la zone couverte et permet de remédier au problème de la limite d'horizon pour les transmissions s'effectuant directement entre navires tout en garantissant une qualité de transmission.

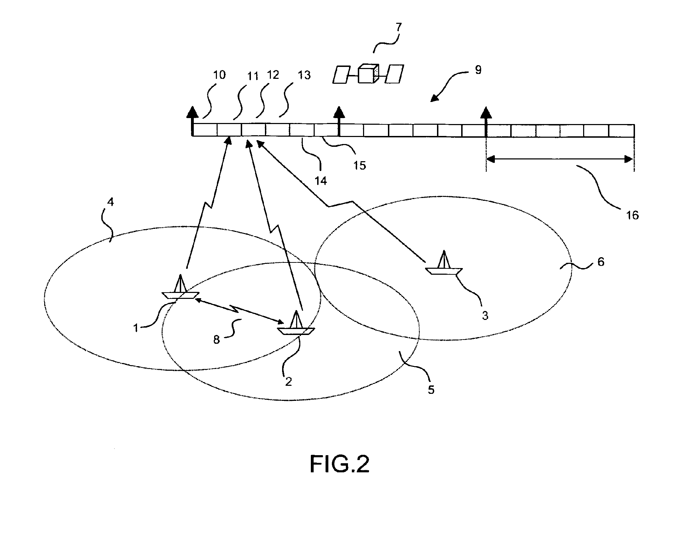

La figure 2 représente plus en détail les deux navires 1 et 2, qui peuvent communiquer directement, ainsi que leur zone 4, 5 de couverture respective. Un navire 3 s'approchant n'est pas en vue directe des navires 1 et 2 et ne peut donc pas communiquer directement avec les navires 1 et 2 étant donné que ni le navire 1, ni le navire 2 n'est situé dans la zone de couverture 6 du navire 3.

En revanche, le navire 3 a la même référence temporelle que les navires 1 et 2 par la réception d'un signal GPS émis, par exemple, par le satellite 7 représenté sur la figure 2. Dans d'autres modes de réalisations le signal GPS pourrait être transmis par un autre satellite.

Il est donc possible pour le navire 3 par l'intermédiaire d'une liaison satellite de communiquer avec les navires 1 et 2. L'attribution des slots du TDMA s'effectue par chacun des navires. La règle est que si un navire ne reçoit pas dans un slot, il peut alors émettre dans ce slot un signal, ce slot étant pour ce navire inoccupé. Un risque est donc que deux navires ne se détectant pas directement s'attribuent le même slot en émission.

La figure 2 représente un exemple de structure TDMA comportant sur une période 16 composés de six slots 10, 11, 12, 13, 14 et 15 de durée égale.

Dans l'exemple, le navire 1 s'est attribué le slot 11 disponible pour émettre ses données. Le navire 2, détectant la présence du navire 1, s'est attribué le slot 12 disponible pour émettre ses données en émission. Enfin, le navire 3, n'ayant pas détecté la présence des navires 1 et 2, n'a donc pas détecté les émissions des slots 11 et 12. Dans notre exemple qui représente un cas critique relatif à l'invention, le navire 3 s'attribue également le slot 12 pour émettre des données. Dans ce dernier cas les données émises par les deux navires peuvent dégrader la liaison et se brouiller.

L'invention permet donc dans un premier temps de détecter une pluralité d'émissions dans un même slot et dans un second temps de décaler au moins une seconde émission recouvrant une première émission dans un slot adjacent libre.

Dans d'autres modes de réalisations le slot attribué n'est pas obligatoirement un slot adjacent.

L'invention permet donc de détecter une seconde émission dans un slot déjà occupé par la transmission de données d'un premier navire afin d'attribuer un slot disponible du TDMA à une seconde émission d'un autre navire.

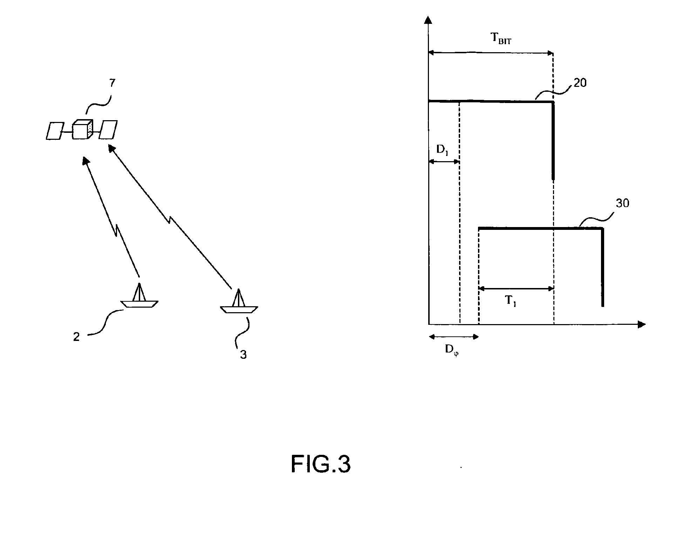

La figure 3 représente les deux navires 2, 3 dans la zone de couverture d'un satellite 7. La figure 3 représente la situation de la figure 2 dans laquelle le navire 3 s'attribue un slot 12. Dans cette configuration, chaque navire 2, 3 peut transmettre des données par l'intermédiaire du satellite, le navire 2 n'est pas vu directement par le navire 3, la limite de portée des transmissions des navires 2 et 3 ne pouvant satisfaire des liaisons directes. Dans ce dernier cas, le slot 11 déjà occupé par les émissions du navire 2 est utilisé également par le navire 3.

Le satellite 7 reçoit alors deux trains de données dont les premiers bits 20 et 30 sont représentés sur la figure 3.

L'invention permet à partir de la détection d'un premier bit 20 reçu :
■ dans un premier temps, de détecter la présence d'une première émission du navire 2 et ;
■ dans un second temps, de retrancher le premier signal du navire 2 au signal reçu sur la durée du premier bit et ;
■ dans un troisième temps de détecter un éventuel second bit d'un second signal d'un autre navire.

Un cas d'application est donné pour un bilan de liaison tel que le débit binaire est de 9600 Bits/s, la puissance reçue par le satellite est de - 100dBm et la modulation de type GMSK.

L'invention ne se limite pas à ce bilan de liaison, elle peut-être appliquée à d'autres débits ou d'autres modulations.

L'invention consiste à utiliser la différence de temps d'arrivée entre les deux émissions.

Le signal reçu du navire 2 sur le satellite 7 arrive en avance de phase par rapport au signal du navire 3 sur le satellite 7.

La boucle de phase est alors accrochée sur des slots TDMA précédents sur lesquels il n'y a pas de collisions de données provenant de différents navires.

Le bilan de liaison permet d'assurer une démodulation avec un TEB inférieur à 10-5 pour intégration sur une période D₁, qui peut être prise dans un exemple de réalisation égale à la durée d'un quart de bit.

La démodulation est effectuée sur le signal reçu en avance de phase sur la période D₁. En cas de détection d'un premier bit, le signal correspondant au bit complet est alors retranché au signal reçu sur l'ensemble de la durée T_{BIT}.

Le signal résiduel, après le retranchement, est également démodulé et permet de détecter un éventuel second bit d'un second signal. Dans notre exemple le bit du navire 3 arrivant dans le même slot TDMA est alors détecté.

L'invention propose donc de soustraire le signal correspondant au premier bit 20, ce dernier étant détecté dans la période D₁, au signal reçu démodulé dans la période T_{BIT}. Dans le cas où une seconde émission serait présente provenant d'un autre navire, le navire 3 dans l'exemple de la figure 3, le second bit de données est alors détecté à son tour lors de la démodulation du signal résiduel dans le slot.

L'invention permet alors d'attribuer un slot libre soit à la première soit à la seconde émission de manière à éviter que les deux émissions de données ne rentrent pas en collision dans le même slot.

Préférentiellement, l'invention permet d'attribuer un slot adjacent au slot comportant les deux trains de données.

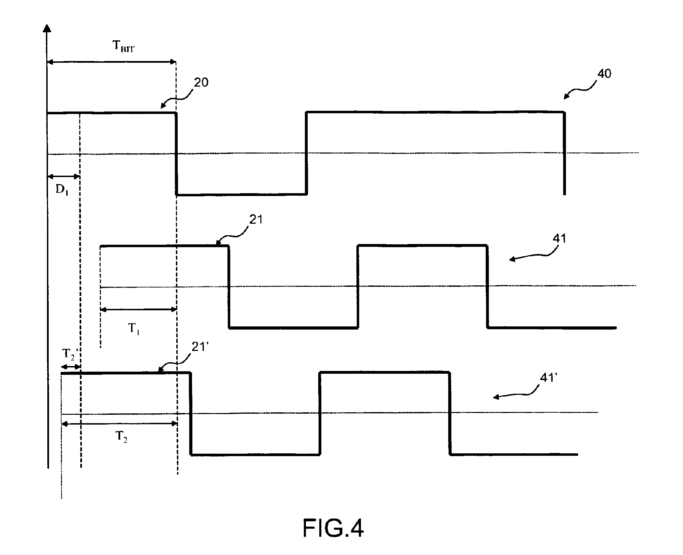

La figure 4 représente deux cas possibles quant à la réception du second signal lorsque celui-ci est émis dans le même slot qu'un slot déjà attribué à un premier signal.

Dans le premier cas, le premier bit 21 du second signal 41 est reçu après la période D_{1.} Dans ce cas, le retranchement, sur la durée du premier bit, du niveau du signal reçu et calculé pendant la période D₁ comprend uniquement le premier signal 40.

Le niveau du signal reçu sur la période D₁ est extrapolée sur la durée T_{BIT} pour être retranché au signal total reçu sur la durée T_{BIT}. Cette opération permet d'identifier le niveau du signal résiduel réparti sur T₁ du second signal reçu. La détection du second signal correspondant au second bit 21 est alors réalisée par un calculateur embarqué dans le satellite.

Dans le second cas, le premier bit 21' du second signal 41' est reçu avant la fin de la période D_{1.} Dans ce dernier cas, le retranchement, sur la durée du premier bit, du niveau du signal reçu calculé pendant la période D₁ comprend le premier signal 40 correspondant au premier bit reçu et une partie du second signal réparti sur la durée T₂'.

La détection d'un niveau du signal anormalement élevé sur la période D₁ peut permettre de déduire directement une probable seconde émission. Dans ce dernier cas, il est possible de déduire directement qu'un second signal est émis dans le slot, en outre il est possible d'ajuster la durée D₁ de manière à recalculer le niveau du signal sur une période plus courte de manière à identifier le niveau du signal à retrancher sur la période du premier bit T_{BIT}.

Dans un mode de réalisation particulier, dans ce second cas, l'invention permet à partir du signal reçu, d'ajuster dynamiquement une période D1 plus petite.

Une variante de réalisation du procédé de l'invention permet d'itérer le procédé afin de détecter un troisième signal émis par un navire dans le même slot que les deux premiers signaux reçus.

Une autre variante de réalisation de l'invention permet de calculer dans un même slot les différentes émissions reçues provenant de différents navires à partir de plusieurs satellites.

En effet, à un instant donné, généralement plusieurs satellites couvrent une zone élargie comprenant différent ensemble de navires n'étant pas nécessairement en vue directs.

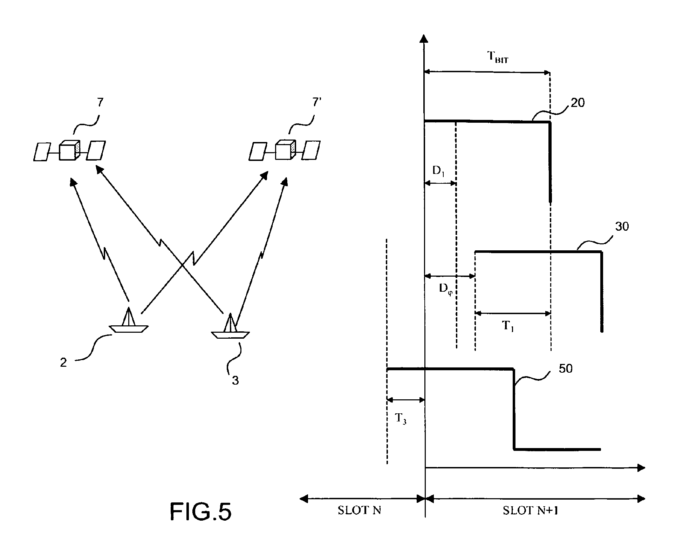

La figure 5 représente le cas des deux navires 2 et 3 ne pouvant pas communiquer directement entre eux car ils sont situés au-delà de la limite de leur zone de couverture respective. Un premier satellite couvre une première zone comprenant les navires 2 et 3 et un second satellite couvre une seconde zone comprenant également les navires 2 et 3.

L'intérêt d'une couverture par une pluralité de satellites est notamment de traiter plus efficacement le cas d'une pluralité de navires émettant dans un même slot. Notamment pour les cas correspondant à la détection d'un troisième navire émettant dans le même slot ou de contrôle de redondance entre plusieurs satellites.

La figure 5 propose une solution qui consiste à utiliser la différence de temps d'arrivée des différentes émissions dans un même slot TDMA sur chacun des satellites.

Le signal 20 est le signal émis par le navire 2 sur le satellite 7, le signal 30 est le signal émis par le navire 3 sur le satellite 7 dans le même slot N du TDMA. A partir de cette référence temporelle, une partie du signal 50 émis par le navire 3 peut-être reçu en avance de phase sur le satellite 7' sur le slot N-1 du TDMA, c'est à dire le slot précédent le slot N.

Si le slot N-1 TDMA précédent n'est pas occupé, alors une partie du bit transmis T3 sera détecté sur le satellite 7'.

La démodulation peut alors se faire sur le signal 50 reçu en avance de phase sur la période T3. Dans un cas de réalisation, le calculateur embarqué dans le satellite 7' examinera en fin de chaque slot, si un bit est reçu en avance de phase sur une période déterminé, par exemple une période fixe telle que D₁, correspondant dans un cas d'exemple à la durée d'un quart de bit.

Le bit complet est alors retranché au signal combiné sur l'ensemble de sa durée dans le slot suivant, de manière à pouvoir démoduler le bit du bateau 2 arrivant dans le même slot TDMA. Il est nécessaire pour cela que la boucle de phase soit accrochée sur des slots TDMA précédents sur lesquels aucun problème de collision n'a eu lieu.

Si une émission d'un troisième navire entre en collision avec les deux émissions précédentes des navires 2 et 3, alors la redondance des satellites permet une meilleure détection de cette troisième émission. Dans ce dernier cas les émissions correspondant aux premiers bits reçus sont soustraites itérativement jusqu'à ce qu'aucun signal ne soit détecté dans le slots, ce qui correspond à un niveau de signal seuil non franchi.

Un avantage d'une telle solution réside dans l'attribution dynamique d'un slot libre à une émission d'un navire chevauchant une autre émission dans le même slot. Ainsi une partie de l'intelligence de l'attribution des slots du TDMA et des calculs de démodulation des signaux reçus est réalisée au sein des satellites.

## Revendications

1. Procédé de répartition de slots TDMA d'un réseau de télécommunication entre navires (1,2,3,1',2',3') pour lesquels une liaison avec au moins un satellite (7) est établie, la structure du TDMA comprenant une pluralité de slots (10,11,12,13,14,15) dans une période de temps fixe (T_{TDMA}), chacun des navires (1,2,1',2',3') étant synchronisé entre eux au moyen d'un dispositif de synchronisation et chacun des navires (1,2,3,1',2',3') émettant, dans au moins un slot (11,12), des données comprenant au moins l'unie des informations relatives soit à l'identité du navire (1,2,3,1',2',3'), soit à sa position, soit à sa vitesse, **caractérisé en ce qu'**il comprend :
■ une étape préliminaire, réalisée au sein du satellite (7), de définition d'un premier paramètre de durée (D₁) définissant une durée d'analyse, pour chacun des slots (10,11,12,13,14,15) du TDMA, de la présence d'un premier bit de données reçu, la durée de transmission d'un bit (D_{BIT}) étant déterminée par le débit de la liaison entre chaque navire (1,2,3,1',2',3') et un satellite (7) ;
pour chaque slot (10,11,12,13,14,15), le procédé comprend :
■ une première étape d'analyse de la valeur du premier bit reçu pendant la durée du premier paramètre (D₁), à l'issue de laquelle la présence d'une émission de données d'un navire (1,2) est déterminée dans le slot actif (11,12), le slot actif (11,12) étant le slot comprenant l'instant présent ;
■ une seconde étape de détection de la présence d'un second signal reçu dans le slot actif (12), en cas de présence d'une première émission de données provenant d'un navire détecté (1,2) à la première étape, comprenant la soustraction du niveau du signal reçu ayant généré le premier bit reçu au signal total reçu pendant la durée de transmission du premier bit reçu **(**D_{BIT}) ;
■ une troisième étape d'analyse du niveau signal résiduel sur la durée de transmission du premier bit afin de détecter la présence d'un second bit de donnée correspondant au premier bit des données d'un éventuel second signal émis par un autre navire (3) dans le même slot TDMA (12) ;
■ Une quatrième étape d'attribution d'un autre slot (13,14,15) du TDMA à l'un des deux signaux reçus ;

2. Procédé de répartition de slots TDMA d'un réseau de télécommunication entre navires (1,2,3,1',2',3') selon la revendication 1, **caractérisé en ce que** les données émises par chaque navire (1,2,3,1',2',3') comprennent des informations relatives à l'identité du navire (1,2,3,1',2',3'), à sa position et à sa vitesse.

3. Procédé de répartition de slots TDMA d'un réseau de télécommunication entre navires (1,2,3,1',2',3') selon l'une des revendications 1 à 2, **caractérisé en ce que** le premier paramètre de durée (D₁) de l'étape préliminaire est sensiblement proche d'un quart de ta durée de réception d'un BIT.

4. Procédé de répartition de slots TDMA d'un réseau de télécommunication entre navires (1,2,3,1',2',3') selon l'une des revendications 1 à 2, **caractérisé en ce que** la détection de la présence d'une émission de données d'un navire (1,2,3,1',2',3') est détectée pour une valeur du premier BIT reçu, lors de la première étape, sensiblement égal à 1 pendant la durée du premier paramètre (D₁).

5. Procédé de répartition de slots TDMA d'un réseau de télécommunication entre navires (1,2,3,1',2',3') selon l'une des revendications 1 à 2, **caractérisé en ce que** la troisième étape comprend la détermination d'une valeur seuil minimale au-dessus de laquelle le niveau du signal reçu résiduel intégré sur la durée de transmission d'un BIT indique la présence d'un second signal provenant d'un autre navire (1,2,3,1',2',3').

6. Procédé de répartition de slots TDMA d'un réseau de télécommunication entre navires (1,2,3,1',2',3') selon l'une des revendications 1 à 2, **caractérisé en ce que** le procédé attribue un slot adjacent (13) au slot actif (12) au navire (1,2,3,1',2',3') émettant le second signal reçu et détecté à la quatrième étape.

7. Procédé de répartition de slots TDMA d'un réseau de télécommunication entre navires (1,2,3,1',2',3') l'une des revendications 1 à 2, **caractérisé en ce que** le moyen de synchronisation est réalisé par un dispositif GPS dont le signal est émis par au moins un satellite et reçu par un ensemble de navires (1,2,3,1',2',3').

8. Procédé de répartition de slots TDMA d'un réseau de télécommunication entre navires (1,2,3,1',2',3') l'une des revendications 1 à 2, **caractérisé en ce qu'**un second satellite (7') effectue chacune des étapes de la revendication 1 et qu'un contrôle de redondance entre les deux satellites (7,7') soit effectué par la transmission entre les deux satellites (7,7') du résultat du test de présence d'une seconde émission dans un slot (10,11,12,13,14,15) du TDMA.

## Claims

1. A process for distributing TDMA slots of a telecommunication network between vessels (1, 2, 3, 1', 2', 3') for which a link with at least one satellite (7) is established, the structure of the TDMA comprising a plurality of slots (10, 11, 12, 13, 14, 15) in a fixed period of time (T_{TDMA}), each vessel (1, 2, 1', 2', 3') being synchronised with the others by means of a synchronisation device and each vessel (1, 2, 3, 1', 2', 3') emitting, in at least one slot (11, 12), data comprising at least one item of information relating to either the identity of the vessel (1, 2, 3, 1', 2', 3'), or its position, or its speed, **characterised in that** it comprises:
a preliminary step, performed within the satellite (7), of defining a first duration parameter (D₁) defining a duration of analysis, for each of the TDMA slots (10, 11, 12, 13, 14, 15), of the presence of a first received data bit, the transmission duration of a bit (D_{BIT}) being determined by the rate of the link between each vessel (1, 2, 3, 1', 2', 3') and a satellite (7);
the process comprising for each slot (10, 11, 12, 13, 14, 15):
a first step of analysing the value of the first bit received for the duration of the first parameter (D1), on completion of which the presence of an emission of data from a vessel (1, 2) is determined in the active slot (11, 12), the active slot (11, 12) being the slot comprising the present instant;
a second step of detecting the presence of a second signal received in the active slot (12), in the event of the presence of a first emission of data originating from a vessel (1, 2) being detected during the first step, comprising the subtraction of the level of the received signal which generated the first received bit from the total signal received during the transmission duration of the first received bit (D_{BIT});
a third step of analysing the residual signal level for the transmission duration of the first bit so as to detect the presence of a second data bit corresponding to the first data bit of a possible second signal emitted by another vessel (3) in the same TDMA slot (12);
a fourth step for assigning another TDMA slot (13, 14, 15) to one of the two received signals.

2. The process for distributing TDMA slots of a telecommunication network between vessels (1, 2, 3, 1', 2', 3') according to claim 1, **characterised in that** the data emitted by each vessel (1, 2, 3, 1', 2', 3') includes information relating to the identity of the vessel (1, 2, 3, 1', 2', 3'), its position and its speed.

3. The process for distributing TDMA slots of a telecommunication network between vessels (1, 2, 3, 1', 2', 3') according to any one of claims 1 to 2, **characterised in that** the first duration parameter (D₁) of the preliminary step is essentially close to a quarter of the reception duration of one Bit.

4. The process for distributing TDMA slots of a telecommunication network between vessels (1, 2, 3, 1', 2', 3') according to any one of claims 1 to 2, **characterised in that** the detection of the presence of a data emission from a vessel (1, 2, 3, 1', 2', 3') is detected for a value of the first received Bit, during the first step, which is essentially equal to 1 for the duration of the first parameter (D1).

5. The process for distributing TDMA slots of a telecommunication network between vessels (1, 2, 3, 1', 2', 3') according to any one of claims 1 to 2, **characterised in that** the third step comprises determining a minimum threshold value above which the level of the received residual signal integrated on the transmission duration of a Bit indicates the presence of a second signal originating from another vessel (1, 2, 3, 1', 2', 3').

6. The process for distributing TDMA slots of a telecommunication network between vessels (1, 2, 3, 1', 2', 3') according to any one of claims 1 to 2, **characterised in that** the process assigns a slot adjacent (13) to the active slot (12) for the vessel (1, 2, 3, 1', 2', 3') emitting the second received signal and which is detected during the fourth step.

7. The process for distributing TDMA slots of a telecommunication network between vessels (1, 2, 3, 1', 2', 3') according to any one of claims 1 to 2, **characterised in that** the means of synchronisation is realised by a GPS device, the signal of which is emitted by at least one satellite and is received by a set of vessels (1, 2, 3, 1', 2', 3').

8. The process for distributing TDMA slots of a telecommunication network between vessels (1, 2, 3, 1', 2', 3') according to any one of claims 1 to 2, **characterised in that** a second satellite (7') performs each of the steps of claim 1, and **in that** a redundancy check between the two satellites (7, 7') is performed by transmission between the two satellites (7, 7') of the result of the test for the presence of a second emission in a TDMA slot (10, 11, 12, 13, 14, 15).

## Patentansprüche

1. Verfahren zum Verteilen von TDMA-Slots eines Telekommunikationsnetzwerks zwischen Schiffen (1, 2, 3, 1', 2', 3'), für die eine Verbindung mit wenigstens einem Satelliten (7) hergestellt wird, wobei die Struktur des TDMA mehrere Slots (10, 11, 12, 13, 14, 15) in einer festen Zeitperiode (T_{TDMA}) beinhaltet, wobei die einzelnen Schiffe (1, 2, 1', 2', 3') mittels einer Synchronisationsvorrichtung miteinander synchronisiert werden und wobei jedes Schiff (1, 2, 3, 1', 2', 3') in wenigstens einem Slot (11, 12) Daten aussendet, die wenigstens Informationen entweder in Bezug auf die Identität des Schiffs (1, 2, 3, 1', 2', 3') oder auf seine Position oder seine Geschwindigkeit beinhalten, **dadurch gekennzeichnet, dass** es wenigstens Folgendes beinhaltet:
einen Einleitungsschritt, ausgeführt innerhalb des Satelliten (7), des Definierens eines ersten Dauerparameters (D₁), der eine Analysedauer, für jeden der TDMA-Slots (10, 11, 12, 13, 14, 15), der Anwesenheit eines ersten empfangenen Datenbits definiert, wobei die Sendedauer eines Bits (D_{BIT}) durch die Geschwindigkeit der Verbindung zwischen den einzelnen Schiffen (1, 2, 3, 1', 2', 3') und einem Satellit (7) bestimmt wird; wobei das Verfahren für jeden Slot (10, 11, 12, 13, 14, 15) Folgendes beinhaltet:
einen ersten Schritt des Analysierens des Wertes des ersten empfangenen Bits für die Dauer des ersten Parameters (D1), nach dessen Ende die Anwesenheit einer Emission von Daten eines Schiffs (1, 2) im aktiven Slot (11, 12) ermittelt wird, wobei der aktive Slot (11, 12) der Slot ist, der den gegenwärtigen Moment beinhaltet:
einen zweiten Schritt des Erkennens der Anwesenheit eines zweiten in dem aktiven Slot (12) empfangenen Signals, falls im ersten Schritt die Anwesenheit einer ersten Emission von von einem Schiff (1, 2) kommenden Daten erfasst wird, der die Subtraktion des Pegels des empfangenen Signals, das das erste empfangene Bit erzeugt hat, von dem Gesamtsignal beinhaltet, das während der Sendedauer des ersten empfangenen Bits (D_{BIT}) empfangen wurde;
einen dritten Schritt des Analysierens des Restsignalpegels für die Sendedauer des ersten Bits, um die Anwesenheit eines zweiten Datenbits zu erfassen, das dem ersten Datenbit eines eventuellen zweiten Signals entspricht, das von einem anderen Schiff (3) im selben TDMA-Slot (12) emittiert wurde;
einen vierten Schritt des Zuweisens eines anderen TDMA-Slots (13, 14, 15) zu einem der beiden empfangenen Signale.

2. Verfahren zum Verteilen von TDMA-Slots eines Telekommunikationsnetzwerks zwischen Schiffen (1, 2, 3, 1', 2', 3') nach Anspruch 1, **dadurch gekennzeichnet, dass** die von jedem Schiff (1, 2, 3, 1', 2', 3') emittierten Daten Informationen in Bezug auf die Identität des Schiffs (1, 2, 3, 1', 2', 3'), auf seine Position und seine Geschwindigkeit beinhaltet.

3. Verfahren zum Verteilen von TDMA-Slots eines Telekommunikationsnetzwerks zwischen Schiffen (1, 2, 3, 1', 2', 3') nach einem der Ansprüche 1 bis 2, **dadurch gekennzeichnet, dass** der erste Dauerparameter (D₁) des Einleitungsschrittes im Wesentlichen etwa ein Viertel der Empfangsdauer von einem Bit beträgt.

4. Verfahren zum Verteilen von TDMA-Slots eines Telekommunikationsnetzwerks zwischen Schiffen (1, 2, 3, 1', 2', 3') nach einem der Ansprüche 1 bis 2, **dadurch gekennzeichnet, dass** die Anwesenheit einer Datenemission von einem Schiff (1, 2, 3, 1', 2', 3') für einen Wert des ersten empfangenen Bits im ersten Schritt erfasst wird, der im Wesentlichen gleich 1 für die Dauer des ersten Parameters (D1) ist.

5. Verfahren zum Verteilen von TDMA-Slots eines Telekommunikationsnetzwerks zwischen Schiffen (1, 2, 3, 1', 2', 3') nach einem der Ansprüche 1 bis 2, **dadurch gekennzeichnet, dass** der dritte Schritt das Ermitteln eines Mindestschwellenwertes beinhaltet, oberhalb dessen der Restpegel des empfangenen Signals, integriert in die Sendedauer eines Bits, die Anwesenheit eines zweiten Signals von einem anderen Schiff (1, 2, 3, 1', 2', 3') anzeigt.

6. Verfahren zum Verteilen von TDMA-Slots eines Telekommunikationsnetzwerks zwischen Schiffen (1, 2, 3, 1', 2', 3') nach einem der Ansprüche 1 bis 2, **dadurch gekennzeichnet, dass** das Verfahren einen Slot (13) neben dem aktiven Slot (12) des Schiffs (1, 2, 3, 1', 2', 3') zuordnet, das das zweite empfangene Signal emittiert und das im vierten Schritt erfasst wird.

7. Verfahren zum Verteilen von TDMA-Slots eines Telekommunikationsnetzwerks zwischen Schiffen (1, 2, 3, 1', 2', 3') nach einem der Ansprüche 1 bis 2, **dadurch gekennzeichnet, dass** das Synchronisationsmittel von einem GPS-Gerät implementiert wird, dessen Signal von wenigstens einem Satelliten emittiert und von einer Gruppe von Schiffen (1, 2, 3, 1', 2', 3') empfangen wird.

8. Verfahren zum Verteilen von TDMA-Slots eines Telekommunikationsnetzwerks zwischen Schiffen (1, 2, 3, 1', 2', 3') nach einem der Ansprüche 1 bis 2, **dadurch gekennzeichnet, dass** ein zweiter Satellit (7') jeden der Schritte von Anspruch 1 ausführt, und **dadurch**, dass eine Redundanzprüfung zwischen den beiden Satelliten (7, 7') ausgeführt wird, indem das Ergebnis des Tests auf Anwesenheit einer zweiten Emission in einem TDMA-Slot (10, 11, 12, 13, 14, 15) zwischen den beiden Satelliten (7, 7') übertragen wird.
